# EUROPEAN PATENT APPLICATION

(11) **EP 3 718 847 A1**
(43) Date of publication of application: **07.10.2020**
(21) Application number: 19465523.9
(22) Date of filing: 05.04.2019
(51) Int. Cl.: B60W 50/00, B60W 30/08, B60W 30/095, G05D 1/02

(54) **METHOD AND SYSTEM FOR TRACKING AT LEAST ONE TRAFFIC PARTICIPANT IN A SURROUNDING OF A VEHICLE**

(71) Applicant: Continental Automotive GmbH, 30165 Hannover (DE)
(72) Inventor: Sasu, Robert, 525200 Covasna (RO)
(74) Representative: Bobbert, Christiana

(57) **Abstract**

The present invention relates to a method and a system for tracking at least one traffic participant (16,) in a surrounding (14) of a vehicle (10) by performing the steps of determining based on data of the at least one traffic participant (16) in the surrounding (14) of the vehicle (10), whether said traffic participant (16) is a motored traffic participant (16), defining for at least one determined motored traffic participant (16) based on its data a set of movement trajectories comprising movement trajectories with different accelerations and/or different moving directions, and estimating at least one probable future position and/or at least one probable future movement of said at least one determined motored traffic participant (16) based on its set of movement trajectories.

## Description

### FIELD OF THE INVENTION

The present invention relates to a method of tracking at least one traffic participant in a surrounding of a vehicle and to a method for driving a vehicle autonomously. Moreover, the present invention relates to a system at least for tracking at least one traffic participant in a surrounding of a vehicle and to a vehicle.

### BACKGROUND OF THE INVENTION

Tracking methods for tracking traffic participants in a present surrounding of a vehicle, which are typically used for autonomous or automated driving of said vehicle, are known from the prior art. US 7,079,991 B2 for instance describes a tracking method using data detected of at least one object and a chi-square probability distribution to predict a probable future position of said object. The at least one object may be a traffic participant, such as a motored traffic participant or a non-motorized traffic participant.

### SUMMARY OF THE INVENTION

It is one of the objects of the present inventions to improve the reliability of a traffic tracking in a surrounding of a vehicle.

The present invention provides a method for tracking at least one traffic participant in a surrounding of a vehicle with the features of claim 1, a method for driving a vehicle autonomously with the features of claim 7, a system at least for tracking at least one traffic participant in a surrounding of a vehicle with the features of claim 8 and a vehicle with the features of claim 10.

The inventive method of tracking at least one traffic participant in a surrounding of a vehicle comprises the steps of detecting for the at least one traffic participant in the surrounding of the vehicle data comprising at least a present position of said traffic participant relative to the vehicle, a present velocity of said traffic participant, a present acceleration of said traffic participant and/or a present moving direction of said traffic participant, wherein the step of detecting the data of the at least one traffic participant is repeated with a constant or varying frequency, and estimating for the at least one traffic participant in the surrounding of the vehicle at least one probable future position and/or at least one probable future movement of said traffic participant based on its data, and the additional steps of determining based on the data of the at least one traffic participant in the surrounding of the vehicle, whether said traffic participant is a motored traffic participant, defining for at least one determined motored traffic participant based on its data a set of movement trajectories comprising movement trajectories with different accelerations and/or different moving directions, and estimating the at least one probable future position and/or the at least one probable future movement of said at least one determined motored traffic participant based on its set of movement trajectories.

As will be explained in further detail below, by performing the step of defining a set of movement trajectories comprising movement trajectories with different accelerations and/or different moving directions for at least one determined motored traffic participant based on its data, the inventive method of tracking at least one traffic participant takes into account the frequency of occurrence of a sudden change of the acceleration and/or the moving directions of a motored traffic participant. Thus, the inventive method provides a more reliable prediction of future positions and/or future movements of the at least one motored traffic participant in the surrounding of the vehicle using said method. Especially, as will be explained further below, the inventive method is able to "learn" from the former moving behavior of the at least one traffic participant and to improve the reliability of the estimation of the at least one probable future position and/or the at least one probable future movement of said motored traffic participant.

In an advantageous embodiment of the method, the set of movement trajectories of the at least one determined motored traffic participant comprises at least a first movement trajectory representing a kinetic model of said motored traffic participant starting from the present position of said motored traffic participant, wherein said motored traffic participant moves with a constant velocity equal to its present velocity in a constant moving direction equal to its present moving direction, and at least one second movement trajectory representing a kinetic model of said motored traffic participant starting from the present position of said motored traffic participant , wherein said motored traffic participant moves with a constant velocity equal to its present velocity in a moving direction different from its present moving direction. This embodiment of the inventive method takes into account that a motored traffic participant often changes its moving direction, for instance for a change of lane, a left turn or a right turn. A user using this embodiment of the inventive method is therefore able to react more advantageously to a sudden change of the moving direction of at least one determined motored traffic participant in the user's present surrounding.

As an alternative or in addition, the set of movement trajectories of the at least one determined motored traffic participant may comprise at least a third movement trajectory representing a kinetic model of said motored traffic participant starting from the present position with the present velocity of said motored traffic participant, wherein said motored traffic participant moves with a constant acceleration equal to its present acceleration in a constant moving direction equal to its present moving direction, and at least one fourth movement trajectory representing a kinetic model of said motored traffic participant starting from the present position with the present velocity of said motored traffic participant, wherein said motored traffic participant moves with an acceleration different from its present acceleration in a constant moving direction equal to its present moving direction. This embodiment of the inventive method takes into account that a motored traffic participant often accelerates or decelerates its velocity. The user of this embodiment of the inventive method is therefore better able to react advantageously to any sudden change of the velocity of the at least one determined motored traffic participant in the user's present surrounding.

In a further advantageous embodiment of the inventive method, for at least one traffic participant in the surrounding of the vehicle determined to be a non-motorized traffic participant based on its data a set of movement trajectories comprising movement trajectories with different accelerations and/or different moving directions is defined, wherein the at least one future position and/or the at least one probable future movement of said at least one determined non-motorized traffic participant is estimated based on its set of movement trajectories. Thus, the inventive method may also take into account that a non-motorized traffic participant, such as a pedestrian or a biker, often changes his moving direction and/or his velocity. The user of this embodiment of the inventive method may thus also react more advantageously to a different moving behavior of the at least one determined non-motorized traffic participant in the user's present surrounding.

Preferably, the set of movement trajectories of the at least one determined non-motorized traffic participant comprises at least a first movement trajectory representing a kinetic model of said non-motorized traffic participant starting from the present position of said non-motorized traffic participant, wherein said non-motorized traffic participant moves with a constant velocity equal to its present velocity in a constant moving direction equal to its present moving direction, and at least one second movement trajectory representing a kinetic model of said non-motorized traffic participant starting from the present position of said non-motorized traffic participant, wherein said non-motorized traffic participant moves with a constant velocity equal to its present velocity in a moving direction different from its present moving direction. This embodiment of the inventive method takes into account that a normal non-motorized traffic participant has often more opportunities to change his moving direction than a motored traffic participant and therefore is less likely to move in a straight line.

According to a further embodiment of the inventive method, the set of movement trajectories of the at least one determined non-motorized traffic participant further comprises at least a third movement trajectory representing a kinetic model of said non-motorized traffic participant starting from the present position of said non-motorized traffic participant, wherein said non-motorized traffic participant moves with a constant velocity equal to its present velocity, but in a moving direction turned by 90° with respect to its present moving direction, and/or a fourth movement trajectory representing a kinetic model of said non-motorized traffic participant starting from the present position of said non-motorized traffic participant, wherein said non-motorized traffic participant moves with a constant velocity equal to its present velocity, but in a moving direction turned by 180° with respect to its present moving direction. A typical non-motorized traffic participant, such as a pedestrian or a biker, has a higher manoeuvrability than a motored traffic participant and therefore quite often performs an instant 90° rotation and/or an instant 180° rotation. However, by using the embodiment of the inventive method described in this paragraph, a reliable prediction of the at least one probable future position and/or the at least one probable future movement of such a non-motorized traffic participant is still possible, even when said non-motorized traffic participant performs such "chaotic" direction changes.

The inventive method for driving a vehicle autonomously comprises the steps of tracking at least one traffic participant in a surrounding of the vehicle by performing any of the methods described in the paragraphs above, determining a nominal acceleration of the vehicle and a nominal steering angle of the vehicle based on the at least one probable future position and/or the at least one probable future movement of the at least one traffic participant in the surrounding of the vehicle, controlling a driving engine and a braking system of the vehicle so that an acceleration of the vehicle correlates to the determined nominal acceleration, and controlling a steering device of the vehicle so that a present steering angle of the vehicle correlates to the determined nominal steering angle. Thus, the methods described in the paragraphs above ensure a more secure autonomous or automated drive of said vehicle.

The inventive system at least for tracking at least one traffic participant in a surrounding of a vehicle comprises a sensor device designed to detect for the at least one traffic participant in the surrounding of the vehicle data comprising at least a present position of said traffic participant relative to the vehicle, a present velocity of said traffic participant, a present acceleration of said traffic participant and/or a present moving direction of said traffic participant, wherein the data is detected with a constant or varying frequency, and a tracking device designed to estimate for the at least one traffic participant in the surrounding of the vehicle at least one probable future position and/or at least one probable future movement of said traffic participant based on its data, wherein the tracking device is further designed to determine based on the data of the at least one traffic participant in the surrounding of the vehicle, whether said traffic participant is a motored traffic participant, to define for at least one determined motored traffic participant based on its data a set of movement trajectories comprising movement trajectories with different accelerations and/or different moving directions, and to estimate the at least one probable future position and/or the at least one probable future movement of said at least one determined motored traffic participant based on its set of movement trajectories.

As will be explained in further detail below, the inventive system also takes into account the frequency of occurrence of a sudden change of the acceleration and/or the moving directions of a motored traffic participant. By defining the set of different movement trajectories for the at least one motored traffic participant in the system's surrounding, wherein each movement trajectory forms a kinematic model of a possible future movement of said motored traffic participant, the tracking device is able to evaluate each of said kinematic models independently, and thus to "predict" the at least one probable future position and/or the at least one probable future movement of said motored traffic participant more reliable. Furthermore, as will be explained further below, the inventive system is also able to "learn" from the former moving behavior of said motored traffic participant and thus to improve the reliability of its estimation of the at least one probable future position and/or the at least one probable future movement of said motored traffic participant.

According to an advantageous embodiment of the inventive system, the system may further comprise an autonomous driving device designed to determine a nominal acceleration of the vehicle and a nominal steering angle of the vehicle based on the at least one probable future position and/or the at least one probable future movement of the at least one traffic participant in the surrounding of the vehicle, and a control device designed to control a driving engine and a braking system of the vehicle so that an acceleration of the vehicle correlates to the determined nominal acceleration, wherein the control device is further designed to control a steering device of the vehicle so that a present steering angle of the vehicle correlates to the determined nominal steering angle. This embodiment of the inventive system can therefore be used to drive the vehicle autonomously with a high security standard.

The advantages of the different embodiments of the inventive system are also provided by a vehicle comprising such a system.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1A to 1C show a traffic situation, a flowchart and a schematic model for illustrating a first embodiment of the method of tracking at least one traffic participant in a surrounding of a vehicle.
Fig. 2 shows another traffic situation for illustrating the first embodiment of the method of tracking at least one traffic participant in a surrounding of a vehicle.
Fig. 3 shows another traffic situation for illustrating a second embodiment of the method of tracking at least one traffic participant in a surrounding of a vehicle.
Fig. 4A and 4B show another traffic situation and a schematic model for illustrating an embodiment of the system used at least for tracking at least one traffic participant in a surrounding of a vehicle.

### DETAILED DESCRIPTION OF THE INVENTION

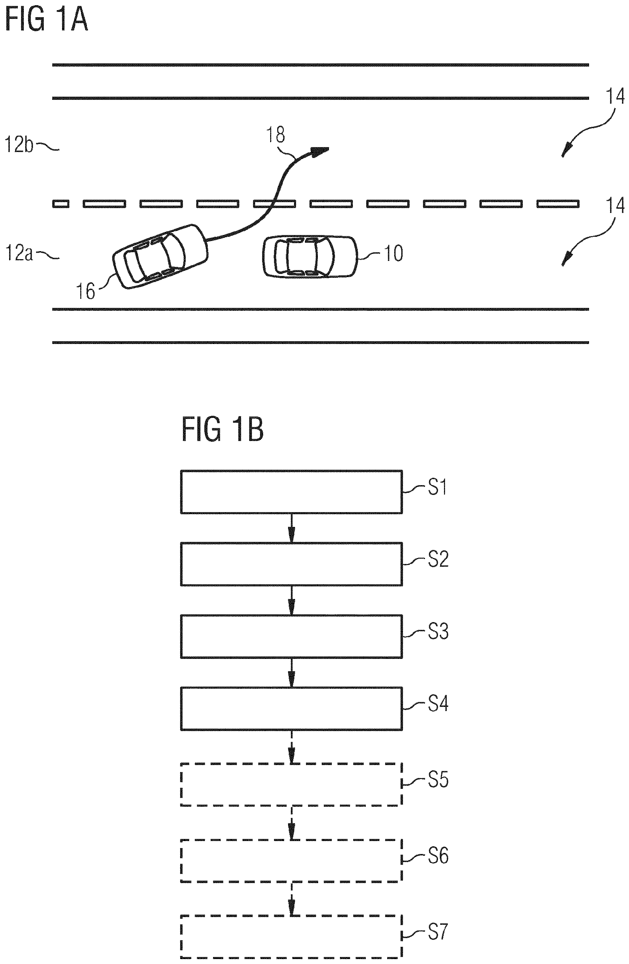

Fig. 1A to 1C show a traffic situation, a flowchart and a schematic model for illustrating a first embodiment of the method of tracking at least one traffic participant in a surrounding of a vehicle.

Fig. 1A exemplarily shows a vehicle 10 driving in a first lane 12a of a road 14. The road 14 also comprises a second lane 12b on the left-hand side of a (present or absent) driver on a driver's seat of vehicle 10. Another car 16 driving behind the vehicle 10 suddenly accelerates and tries to make a fast lane change from the first lane 12a to the second lane 12b to overtake vehicle 10, as is indicated in Fig. 1A by arrow 18.

To track the traffic in the surrounding 14 of vehicle 10, the method shown schematically in the flowchart of Fig. 1B is performed. Method step S1 of the method is a data detection step, wherein data for the at least one traffic participant 16 in the surrounding 14 of the vehicle 10 is detected. The at least one traffic participant 16 in the surrounding 14 of the vehicle 10 may be at least one motored traffic participant 16, such as a car 16, a motorcycle/motorbike, a tractor or a truck, and/or at least one non-motorized traffic participant, like a pedestrian or a bike/biker. In the example of Fig. 1A to 1C, the surrounding 14 of the vehicle 10 consists only of road 14 and car 16 is the only traffic participant 16 in the surrounding 14 of vehicle 10.

The detected data comprise at least a present position of said traffic participant 16 relative to the vehicle 10, a present velocity of said traffic participant 16, a present acceleration of said traffic participant 16 and a present moving direction of said traffic participant 16. Thus, in the example of Fig. 1A to 1C, the method step S1 comprises at least the detection of a present position of car 16 relative to vehicle 10, the present velocity of car 16, the present acceleration of car 16 and the present moving direction of car 16. The wording "acceleration" comprises "positive accelerations" as well as "negative accelerations"/ decelerations.

A (not shown) sensor device of vehicle 10 may be used to perform the method step S1. The sensor device may also be used to distinguish the at least one traffic participant 16 in the surrounding 14 of vehicle 10 from an immobile object. The sensor device may comprise for instance at least one ultrasonic sensor unit and/or at least one optical sensor unit, especially at least one camera. The sensor device may further comprise a computer to evaluate the sensor data of the at least one ultrasonic sensor unit and/or the at least one optical sensor unit and to determine the detected data. However, the performance of method step S1 is not restricted to the use of a certain type of sensor device for detecting the data of the at least one traffic participant 16 in the surrounding 14 of the vehicle 10.

The method step S1 of detecting the data of the at least one traffic participant 16 in the surrounding 14 is repeated with a constant or varying frequency.

The method also comprises a method step S2 of determining based on the data of the at least one traffic participant 16 in the surrounding 14 of vehicle 10, whether said traffic participant 16 is a motored traffic participant 16 (or a non-motorized traffic participant). A motored traffic participant 16 may be distinguished from a non-motorized traffic participant due to its velocity and/or its acceleration, for instance. Thus, the data detected in method step S1 may be used to perform method step S2. However, a motored traffic participant 16 may also be distinguished from a non-motorized traffic participant due to its size and/or its outer form. In such a case, the size and/or the outer form of the at least one traffic participant 16 in the surrounding 14 of vehicle 10 may be detected by the sensor device of vehicle 10, too. Thus, there are many opportunities to determine that car 16 is a motored traffic participant 16. The method step S2 may be performed before or after the method step S1. Moreover, method step S2 may be repeated with the same frequency as method step S1. Alternatively, method step S2 may be performed less often than method step S1. The method step S2 may be performed by a (not shown) tracking device of vehicle 10, for instance.

After each performance of method step S1, a method step S3 is performed for at least one determined motored traffic participant 16. Method step S3 may also be performed by the tracking device. As method step S3, a set of movement trajectories SM1 to SM6 is defined for the at least one determined motored traffic participant 16 is further based on its data (newly detected by the performance of method step S1), wherein the newly defined set of movement trajectories SM1 to SM6 comprises movement trajectories SM1 to SM6 with different accelerations and/or different moving directions.

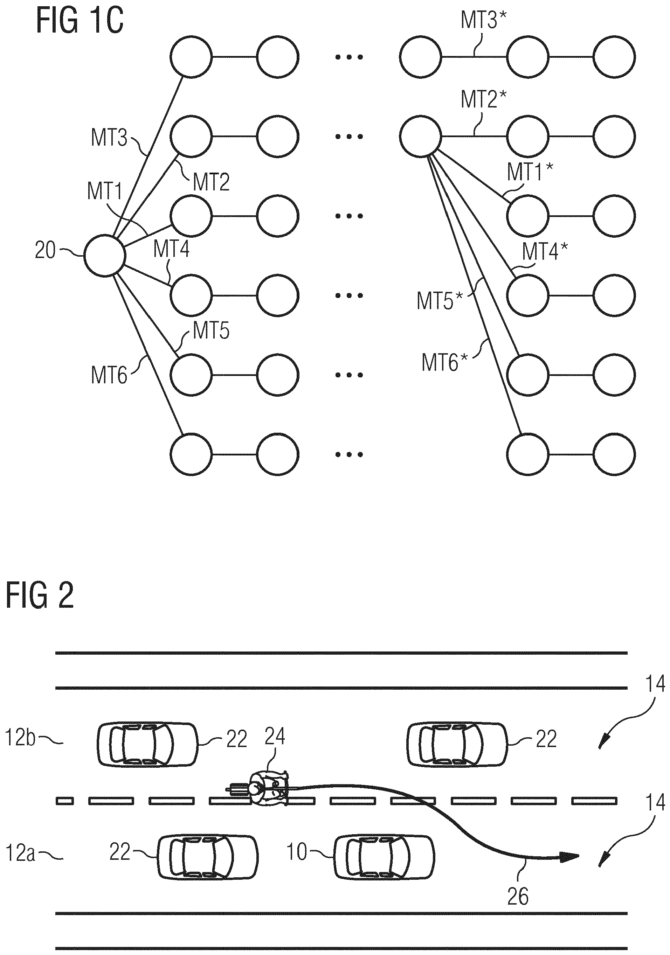

A schematic model of a set of movement trajectories SM1 to SM6 is shown in Fig. 1C. As is indicated by a circle 20 in Fig. 1C, all the movement trajectories SM1 to SM6 of the same set start from the present position and the present velocity of said motored traffic participant 16 (newly detected in method step S1). Method step S3 thus takes into account that the present position and the present velocity of said motored traffic participant 16 is highly reliable information.

However, the movement trajectories MT1 to MT 6 of the same set may differ from each other significantly: There is a first movement trajectory MT1 representing a kinetic model of said motored traffic participant 16 moving with a constant velocity equal to its present velocity in a constant moving direction equal to its present moving direction. The first movement trajectory MT1 thus represents a "constant velocity straight drive model", wherein the motored traffic participant 16 is not accelerated/decelerated and does not change its steering angle. A second and a third movement trajectory MT2 and MT3 each represent a kinetic model of said motored traffic participant 16 moving with the constant velocity equal to its present velocity in a moving direction different from its present moving direction. The second and the third movement trajectory MT2 and MT3 represent "constant velocity different turning models" with different steering angles, wherein the motored traffic participant 16 is not accelerated/decelerated, but changes its movement direction. For instance, the tracking device may recognize that car 16 has the opportunity to move from the first lane 12a to the second lane 12b and thus define two possible left turns of car 16 as the second and the third movement trajectory MT2 and MT3. A fourth movement trajectory MT4 represents a kinetic model of said motored traffic participant 16 moving with a constant acceleration equal to its present acceleration in a constant moving direction equal to its present moving direction. The fourth movement trajectory MT4 thus can be called a "constant acceleration straight drive model", wherein the motored traffic participant 16 is accelerated/decelerated, but does not change its steering angle. A fifth and a sixth movement trajectory MT5 and MT6 each represent a kinetic model of said motored traffic participant 16 moving with an acceleration different from its present acceleration in a constant moving direction equal to its present moving direction. The fifth and the sixth movement trajectory MT5 and MT6 thus represent "constant acceleration straight drive models" with different accelerations, wherein the motored traffic participant 16 is accelerated/decelerated, but does not change its steering angle.

Each movement trajectory MT1 to MT6 is a kinematic model of a driving manoeuver that the determined motored traffic participant 16 may perform. Each of the movement trajectories MT1 to MT6 may be defined as a Markov-Chain. Moreover, each of these movement trajectories MT1 to MT6 may be easily written in Kalman-filter form. Regression algorithms may also be used for defining the movement trajectories MT1 to MT6.

In the embodiment of Fig. 1A to 1C, the set of movement trajectories MT1 to MT6 is a set of kinematic models representing a variety of different driving trajectories that car 16 is able to perform. Thus, the set of movement trajectories MT1 to MT6 may comprise a kinematic model for each possible movement of car 16. The set of movement trajectories MT1 to MT6 thus reflects a "variety of different realities" even though it is difficult to predict what kind of manoeuver car 16 is likely to perform next.

In a method step S4 of the method, at least one probable future position and/or at least one probable future movement is estimated for the at least one traffic participant 16 in the surrounding 14 of the vehicle 10, wherein the at least one probable future position and/or the at least one probable future movement of said traffic participant 16 is estimated based on its data. The estimation of the at least one probable future position and/or the at least one probable future movement of said at least one determined motored traffic participant 16 is further based on its set of movement trajectories MT1 to MT6. Thus, it is possible to improve the reliability of the estimation of method step S4 by considering the set of movement trajectories MT1 to MT6. Method step S4 may be performed by the tracking device, for instance.

As it is further shown in Fig. 1C, after each repetition of method step S1, it is possible to select at least one movement trajectory MT2 and MT3 from the formerly defined set MT1 to MT6 that corresponds the most to the newly detected data. For instance, it is possible to select the movement trajectories MT2 and MT3 that correspond to the fast lane change of car 16. (In case that car 16 first accelerates before performing the fast lane change, it is also possible to select at least one movement trajectory corresponding to the acceleration of car 16.) As there is a movement trajectory for each possible movement of car 16, there is no risk of "losing" car 16 due to a sudden change of its driving manoeuver. Thus, the conventional risk of a "traffic participant loss", an "object loss" or a "blind spot" is overcome by the method of Fig. 1B. Even a driving manoeuver like the one represented in Fig. 1A by arrow 18 is trackable.

The at least one selected movement trajectory MT2 and MT3 may then be used to update the formerly defined set MT1 to MT6 by defining a new set of movement trajectories MT1* to MT6*. Thus, each cycle of performance of method step S3 improves the kinematic models MT1* to MT6* in a way that they represent reality better. Moreover, by comparing formerly defined movement trajectories MT1 to MT6 with newly acquired data, each repetition of method step S3 provides more "experience" about the tracked motored traffic participant 16. It is therefore possible to use the "experience" gained by the repetition of method step S3 to "learn" from the former moving behavior of the tracked motored traffic participant 16 and to improve the reliability of the estimation of its at least one probable future position and/or its at least one probable future movement.

The method of Fig. 1B may also comprise the optional method steps S5 to S7. In method step S5 a nominal acceleration of vehicle 10 and a nominal steering angle of vehicle 10 are determined based at least on the at least one probable future position and/or the at least one probable future movement of the at least one traffic participant 16 in the surrounding 14 of vehicle 10. Then, a driving engine and a braking system of vehicle 10 are controlled so that an acceleration of vehicle 10 correlates to the determined nominal acceleration (method step S6). Similarly, as method step S7 a steering device of vehicle 10 is controlled so that a present steering angle of vehicle 10 correlates to the determined nominal steering angle. The method of Fig. 1B may therefore also be performed for driving vehicle 10 autonomously.

Fig. 2 shows another traffic situation for illustrating the first embodiment of the method of tracking at least one traffic participant in a surrounding of a vehicle.

In the traffic situation schematically shown in Fig. 2, vehicle 10 is driving in a lane 12b of a road 14, while other cars 22 are driving in the same lane 12b or in another lane 12a of the same road 14 on the right-hand side of a (present or absent) driver on a driver's seat of vehicle 10. The cars 22 are driving around vehicle 10 in the same direction, each car 22 with a constant velocity and without any change of its moving direction.

A motorcycle 24 is overtaking the cars 22 and thus approaches vehicle 10. A driving manoeuver of the motorcycle 24 is represented by arrow 26 in Fig. 2. Even though the movements of the motorbike 24 differ significantly from the driving behavior of the cars 22, it is nevertheless possible to track the motorcycle 24 successfully by performing the method of Fig. 1B. Although the movements of the motorbike 24 are rather chaotic, it is possible to define movement trajectories corresponding to them. It is therefore possible at each repetition of method step S1 to select at least one movement trajectory that corresponds to the present behavior of the motorcycle 24. Thus, there is no risk of a "traffic participant loss", an "object loss" or a "blind spot". Moreover, the accuracy of the tracking of the motorcycle 24 by performing the method of Fig. 1B is good and allows a reliable prediction of the probable future positions and/or probable future movements of the motorcycle 24.

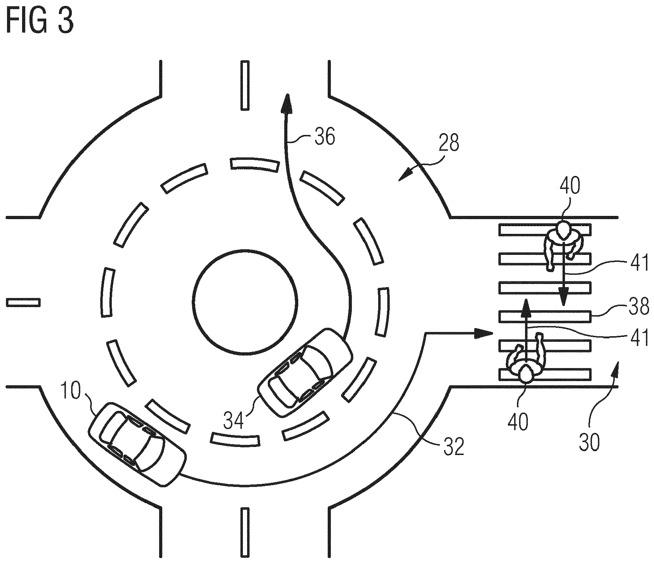

Fig. 3 shows another traffic situation for illustrating a second embodiment of the method of tracking at least one traffic participant in a surrounding of a vehicle.

In the traffic situation schematically shown in Fig. 3, a vehicle 10 is driving in roundabout 28, but will leave the roundabout 28 to enter a road 30, as is indicated by arrow 32. A car 34, whose driving manoeuver is indicated by arrow 36, is also driving in the roundabout 28 in front of vehicle 10. As can be further seen in Fig. 3, there is a crosswalk 38 in road 30 and two pedestrians 40 are using the crosswalk 38 to cross road 30 (see arrows 41).

The embodiment described here comprises all the method steps S1 to S4 of Fig. 1B. In addition to the method steps S1 to S4 described above, the method step S3 is also performed for at least one traffic participant 40 in the surrounding 28 and 30 of the vehicle 10 determined to be a non-motorized traffic participant 40, like the two pedestrians 40 using the crosswalk 38. Thus, for at least one traffic participant 40 in the surrounding 28 and 30 of the vehicle 10 determined to be a non-motorized traffic participant 40 a set of movement trajectories is defined based on its data, wherein said set of movement trajectories comprises movement trajectories with different accelerations and/or different moving directions. For instance, movement trajectories corresponding to the set of movement trajectories MT1 to MT6 described above may be defined for each of the two pedestrians 40. Of course, the values of the accelerations and/or moving directions used to define movement trajectories for a motored traffic participant 34 may differ (significantly) from the values of the accelerations and/or moving directions used to define movement trajectories for a non-motorized traffic participant 40.

Preferably, the set of movement trajectories defined for the at least one determined non-motorized traffic participant 40 also comprises an additional movement trajectory that starts from the present position of said non-motorized traffic participant 40 and represents a kinematic model of said non-motorized traffic participant 40 moving with a constant velocity equal to its present velocity, but in a moving direction turned by 90° with respect to its present moving direction. Similarly, another movement trajectory may be defined for the at least one determined non-motorized traffic participant 40 that starts from the present position of said non-motorized traffic participant 40 and represents a kinematic model of said non-motorized traffic participant 40 moving with a constant velocity equal to its present velocity, but in a moving direction turned by 180° with respect to its present moving direction. This embodiment of the method thus takes into account that a normal non-motorized traffic participant 40 has a higher manoeuvrability than a motored traffic participant 34 and therefore quite often performs a sudden 90° rotation and/or a sudden 180° rotation.

When the method step S4 is performed, the at least one probable future position and/or the at least one probable future movement of said at least one determined non-motorized traffic participant 40 is estimated based on its set of movement trajectories. Thus, it is even possible to track all the non-motorized traffic participants 40 shown in Fig. 3, because there will be always a match between at least one of the movement trajectories of the set of movement trajectories defined for each of them and the real moving behavior of said non-motorized traffic participant 40.

The embodiment of Fig. 3 may also comprise the (optional) method steps S5 to S7 described above. Thus, even though different types of traffic participants 34 and 40 behave differently, an autonomous drive of vehicle 10 is adaptable to all the different traffic participants 34 and 40 around it.

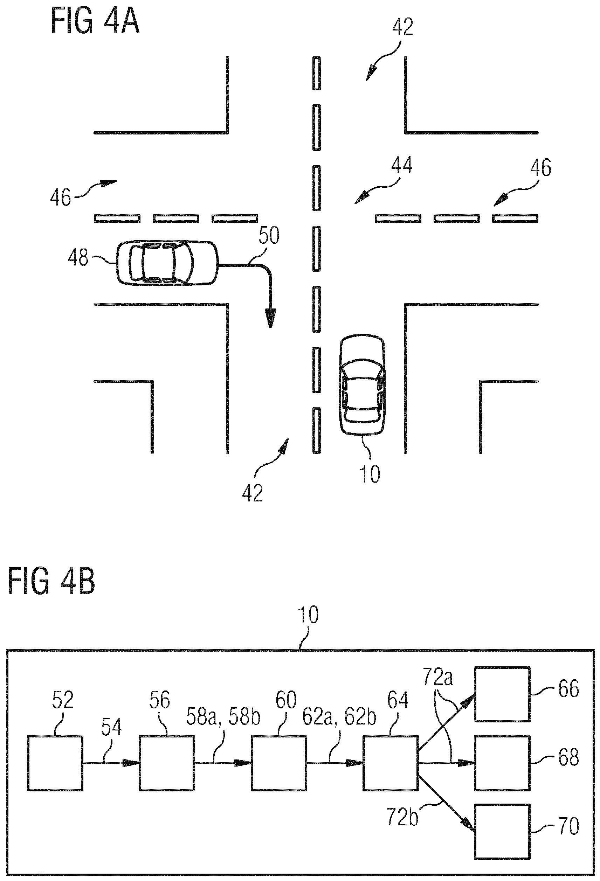

Fig. 4A and 4B show another traffic situation and a schematic model for illustrating an embodiment of the system used at least for tracking at least one traffic participant in a surrounding of a vehicle.

In the traffic situation shown in Fig. 4, a vehicle 10 driving in a first road 42 enters a crossing 44 of the first road 42 and a second road 46. A car 48 driving in the second road 46 is coming from a left-hand side of a (present or absent) driver on a driver's seat of vehicle 10. As is indicated by arrow 50 in Fig. 4, the car 48 intends to make a right turn into the first road 42.

Vehicle 10 comprises a sensor device 52 of the system designed to detect for the at least one traffic participant 48 in the surrounding 42 to 46 of vehicle 10 data 54 comprising at least a present position of said traffic participant 48 relative to vehicle 10, a present velocity of said traffic participant 48, a present acceleration of said traffic participant 48 and/or a present moving direction of said traffic participant 48. Examples of the sensor device 52 are already described above. The detection of data 54 may be repeated with a constant or varying frequency. For instance, the frequency may be in a range between 15 milliseconds and 100 milliseconds. The data 54 is then transferred to a tracking device 56 of the system.

The tracking device 56 is designed to estimate for the at least one traffic participant 48 in the surrounding 42 to 46 of the vehicle 10 at least one probable future position 58a and/or at least one probable future movement 58b of said traffic participant 48 based on its data 54. Moreover, the tracking device 56 is further designed to determine based on the data 54 of the at least one traffic participant 48 in the surrounding 42 to 46 of the vehicle 10, whether said traffic participant 48 is a motored traffic participant 48. The tracking device 56 is then designed to define for at least one determined motored traffic participant 48 based on its data 54 a set of movement trajectories comprising movement trajectories with different accelerations and/or different moving directions, and to estimate the at least one probable future position 58a and/or the at least one probable future movement 58b of said at least one determined motored traffic participant 48 based on its set of movement trajectories. Thus, by using the system, the right-hand turn of car 48 is easily and reliably tracked. Especially, the tracking device 56 may be designed to perform all the method steps described above, for instance also the method steps of Fig. 3.

Optionally, the system may also comprise an autonomous driving device 60 designed to determine a nominal acceleration 62a of vehicle 10 and a nominal steering angle 62b of vehicle 10 based on the at least one probable future position 58a and/or the at least one probable future movement 58b of the at least one traffic participant 48 in the surrounding 42 to 46 of vehicle 10. Then, a control device 64 designed to control a driving engine 66, a braking system 68 and a steering device 70 of vehicle 10 may trigger an acceleration of vehicle 10 equal to the determined nominal acceleration 62a (by sending a first control signal 72a to the driving engine 66 and/or the braking system 68) and a present steering angle of vehicle 10 equal to the determined nominal steering angle 62b (by sending a second control signal 72b to the steering device 70).

The system of Fig. 4 may therefore provide all the advantages of the methods described above. Especially, the system uses multiple kinetic models in parallel for tracking each traffic participant 48 with a high accuracy. Thus, each traffic participant 48 is tracked with several kinematic models at every time according to a chosen metric between the prediction and the measurement for each of the kinematic models. Therefore, it is always possible to have the best probable answer for every type of manoeuver and to react to it as fast as possible. Vehicle 10 comprising the system thus also provides all these advantages.

## Claims

1. Method of tracking at least one traffic participant (16, 22, 24, 34, 40, 48) in a surrounding (14, 28, 30, 42 to 46) of a vehicle (10), the method comprising the steps of:
Detecting for the at least one traffic participant (16, 22, 24, 34, 40, 48) in the surrounding (14, 28, 30, 42 to 46) of the vehicle (10) data (54) comprising at least a present position of said traffic participant (16, 22, 24, 34, 40, 48) relative to the vehicle (10), a present velocity of said traffic participant (16, 22, 24, 34, 40, 48), a present acceleration of said traffic participant (16, 22, 24, 34, 40, 48) and/or a present moving direction of said traffic participant (16, 22, 24, 34, 40, 48), wherein the step of detecting the data (54) of the at least one traffic participant (16, 22, 24, 34, 40, 48) is repeated with a constant or varying frequency; and
Estimating for the at least one traffic participant (16, 22, 24, 34, 40, 48) in the surrounding (14, 28, 30, 42 to 46) of the vehicle (10) at least one probable future position (58a) and/or at least one probable future movement (58b) of said traffic participant (16, 22, 24, 34, 40, 48) based on its data (54);
**characterized by** the steps of:
Determining based on the data (54) of the at least one traffic participant (16, 22, 24, 34, 40, 48) in the surrounding (14, 28, 30, 42to 46) of the vehicle (10), whether said traffic participant (16, 22, 24, 34, 40, 48) is a motored traffic participant (16, 22, 24, 34, 48);
Defining for at least one determined motored traffic participant (16, 22, 24, 34, 48) based on its data (54) a set of movement trajectories (MT1 to MT6) comprising movement trajectories (MT1 to MT6) with different accelerations and/or different moving directions; and
Estimating the at least one probable future position (58a) and/or the at least one probable future movement (58b) of said at least one determined motored traffic participant (16, 22, 24, 34, 48) based on its set of movement trajectories (MT1 to MT6).

2. Method according to claim 1, wherein the set of movement trajectories (MT1 to MT6) of the at least one determined motored traffic participant (16) comprises at least:
- a first movement trajectory (MT1) representing a kinetic model of said motored traffic participant (16) starting from the present position of said motored traffic participant (16), wherein said motored traffic participant (16) moves with a constant velocity equal to its present velocity in a constant moving direction equal to its present moving direction; and
- at least one second movement trajectory (MT2 and MT3) representing a kinetic model of said motored traffic participant (16) starting from the present position of said motored traffic participant (16), wherein said motored traffic participant (16) moves with a constant velocity equal to its present velocity in a moving direction different from its present moving direction.

3. Method according to claim 1 or 2, wherein the set of movement trajectories (MT1 to MT6) of the at least one determined motored traffic participant (16) comprises at least:
- a third movement trajectory (MT4) representing a kinetic model of said motored traffic participant (16) starting from the present position with the present velocity of said motored traffic participant (16), wherein said motored traffic participant (16) moves with a constant acceleration equal to its present acceleration in a constant moving direction equal to its present moving direction; and
- at least one fourth movement trajectory (MT5 and MT6) representing a kinetic model of said motored traffic participant (16) starting from the present position with the present velocity of said motored traffic participant (16), wherein said motored traffic participant (16) moves with an acceleration different from its present acceleration in a constant moving direction equal to its present moving direction.

4. Method according to any one of the preceding claims, wherein for at least one traffic participant (40) in the surrounding (28, 30) of the vehicle (10) determined to be a non-motorized traffic participant (40) based on its data (54) a set of movement trajectories comprising movement trajectories with different accelerations and/or different moving directions is defined, and wherein the at least one future position (58a) and/or the at least one probable future movement (58b) of said at least one determined non-motorized traffic participant (40) is estimated based on its set of movement trajectories.

5. Method according to claim 4, wherein the set of movement trajectories of the at least one determined non-motorized traffic participant (40) comprises at least:
- a first movement trajectory representing a kinetic model of said non-motorized traffic participant (40) starting from the present position of said non-motorized traffic participant (40), wherein said non-motorized traffic participant (40) moves with a constant velocity equal to its present velocity in a constant moving direction equal to its present moving direction; and
- at least one second movement trajectory representing a kinetic model of said non-motorized traffic participant (40) starting from the present position of said non-motorized traffic participant (40), wherein said non-motorized traffic participant (40) moves with a constant velocity equal to its present velocity in a moving direction different from its present moving direction.

6. Method according to claim 4 or 5, wherein the set of movement trajectories of the at least one determined non-motorized traffic participant (40) further comprises at least:
- a third movement trajectory representing a kinetic model of said non-motorized traffic participant (40) starting from the present position of said non-motorized traffic participant (40), wherein said non-motorized traffic participant (40) moves with a constant velocity equal to its present velocity, but in a moving direction turned by 90° with respect to its present moving direction; and/or
- a fourth movement trajectory representing a kinetic model of said non-motorized traffic participant (40) starting from the present position of said non-motorized traffic participant (40), wherein said non-motorized traffic participant (40) moves with a constant velocity equal to its present velocity, but in a moving direction turned by 180° with respect to its present moving direction.

7. Method for driving a vehicle (10) autonomously, the method comprising the steps of:
Tracking at least one traffic participant (16, 22, 24, 34, 40, 48) in a surrounding (14, 28, 30, 42 to 46) of the vehicle (10) by performing the method according to any one of the preceding claims;
Determining a nominal acceleration (62a) of the vehicle (10) and a nominal steering angle (62b) of the vehicle (10) based on the at least one probable future position (58a) and/or the at least one probable future movement (58b) of the at least one traffic participant (16, 22, 24, 34, 40, 48) in the surrounding (14, 28, 30, 42 to 46) of the vehicle (10);
Controlling a driving engine (66) and a braking system (68) of the vehicle (10) so that an acceleration of the vehicle (10) correlates to the determined nominal acceleration (62a); and
Controlling a steering device (70) of the vehicle (10) so that a present steering angle of the vehicle (10) correlates to the determined nominal steering angle (72b).

8. System at least for tracking at least one traffic participant (16, 22, 24, 34, 40, 48) in a surrounding (14, 28, 30, 42 to 46) of a vehicle (10), comprising:
a sensor device (52) designed to detect for the at least one traffic participant (16, 22, 24, 34, 40, 48) in the surrounding (14, 28, 30, 42 to 46) of the vehicle (10) data (54) comprising at least a present position of said traffic participant (16, 22, 24, 34, 40, 48) relative to the vehicle (10), a present velocity of said traffic participant (16, 22, 24, 34, 40, 48), a present acceleration of said traffic participant (16, 22, 24, 34, 40, 48) and/or a present moving direction of said traffic participant (16, 22, 24, 34, 40, 48), wherein the data (54) is detected with a constant or varying frequency; and
a tracking device (56) designed to estimate for the at least one traffic participant (16, 22, 24, 34, 40, 48) in the surrounding (14, 28, 30, 42 to 46) of the vehicle (10) at least one probable future position (58a) and/or at least one probable future movement (58b) of said traffic participant (16, 22, 24, 34, 40, 48) based on its data (54);
**characterized in that**
the tracking device (56) is further designed to determine based on the data (54) of the at least one traffic participant (16, 22, 24, 34, 40, 48) in the surrounding (14, 28, 30, 42 to 46) of the vehicle (10), whether said traffic participant (16, 22, 24, 34, 40, 48) is a motored traffic participant (16, 22, 24, 34, 48), to define for at least one determined motored traffic participant (16, 22, 24, 34, 48) based on its data (54) a set of movement trajectories (MT1 to MT6) comprising movement trajectories (MT1 to MT6) with different accelerations and/or different moving directions, and to estimate the at least one probable future position (58a) and/or the at least one probable future movement (58b) of said at least one determined motored traffic participant (16, 22, 24, 34, 48) based on its set of movement trajectories (MT1 to MT6).

9. System according to claim 8, wherein the system further comprises:
an autonomous driving device (60) designed to determine a nominal acceleration (62a) of the vehicle (10) and a nominal steering angle (62b) of the vehicle (10) based on the at least one probable future position (58a) and/or the at least one probable future movement (58b) of the at least one traffic participant (16, 22, 24, 34, 40, 48) in the surrounding (14, 28, 30, 42 to 46) of the vehicle (10); and
a control device (64) designed to control a driving engine (66) and a braking system (68) of the vehicle (10) so that an acceleration of the vehicle (10) correlates to the determined nominal acceleration (62a), wherein the control device (64) is further designed to control a steering device (70) of the vehicle (10) so that a present steering angle of the vehicle (10) correlates to the determined nominal steering angle (62b).

10. Vehicle (10), comprising a system according to claim 8 or 9.
